# EUROPÄISCHE PATENTSCHRIFT

(11) **EP 0 961 697 B1**
(45) Veröffentlichungstag und Bekanntmachung des Hinweises auf die Patenterteilung: **10.12.2003**
(21) Anmeldenummer: 98912343.5
(22) Anmeldetag: 19.02.1998
(51) Int. Cl.: B60C 27/14

(54) **VORRICHTUNG ZUM SELBSTÄNDIGEN AUFZIEHEN EINES GLEITSCHUTZELEMENTS, INSBESONDERE EINER SCHNEEKETTE, AUF EIN FAHRZEUGRAD**
DEVICE FOR AUTOMATICALLY MOUNTING AN ANTISKID ELEMENT, IN PARTICULAR A SNOW CHAIN, ON A VEHICLE WHEEL
DISPOSITIF POUR MONTER AUTOMATIQUEMENT UN ELEMENT ANTIDERAPANT, NOTAMMENT UNE CHAINE ANTI-NEIGE, SUR UNE ROUE DE VEHICULE

(30) Priorität: 24.02.1997 DE 19714454; 23.01.1998 DE 19802543
(43) Veröffentlichungstag der Anmeldung: 08.12.1999
(73) Patentinhaber: Reiber, Konrad, 86860 Jengen (DE)
(72) Erfinder: Reiber, Konrad, 86860 Jengen (DE)
(74) Vertreter: GROSSE BOCKHORNI SCHUMACHER
(86) Internationale Anmeldenummer: EP9800966
(87) Internationale Veröffentlichungsnummer: WO98038052

(56) Entgegenhaltungen:
- DE-A- 2 029 667
- DE-A- 4 233 080
- FR-A- 2 450 166
- US-A- 2 746 507

## Beschreibung

Die Erfindung betrifft eine Vorrichtung gemäß dem Oberbegriff des Patentanspruches 1.

Schneeketten sind in den vielfältigsten Konstruktions- und Ausführungsformen bekannt. Allen bisher bekannten Lösungen ist jedoch gemeinsam, daß die Schneekette noch in aufwendiger Weise auf dem Fahrzeugrad montiert werden muß. Auch bei ausgereiften Konstruktionen ist es hierbei jeweils erforderlich, die Kette von außen auf das Fahrzeugrad manuell aufzulegen und über das Rad zu ziehen, das Fahrzeug zu verfahren, so daß die Kette um das Rad herum angeordnet ist und hinter dem Fahrzeugrad die Kette innerhalb der Kotflügelhaube zu schließen. Diese Handhabung ist außerordentlich umständlich, zumal bei den neuen Fahrzeugen der hinter dem Rad verfügbare Raum immer kleiner und damit das Hantieren mit der Schneekette zum Zwecke des Zusammenschließens immer schwieriger wird. Überdies muß die auf das Fahrzeugrad derart aufgezogene Schneekette nach einigen Radumdrehungen separat nachgespannt werden, so ein stabiler Halt der Schneekette auf dem Rad bzw. Reifen gewährleistet sein soll. Zu bedenken ist hierbei ferner, daß das Aufbringen der Schneekette zumeist unter außerordentlich widrigen Umständen, bei Schnee und Kälte erfolgt, was die bei den bekannten Schneeketten erforderliche umständliche Handhabung außerordentlich problematisch macht.

Aus der US 2,746,507 ist eine gattungsgemässe Vorrichtung zum selbsttätigen Aufziehen eines Gleitschutzelements auf ein Fahrzeugrad bekannt, wobei das Gleitschutzelement aus einem langgezogenen Band aus elastischem Material gebildet ist. Beide Enden des Gleitschutzelements sind durch ein Schloss miteinander verbindbar, welches im wesentlichen zwei Platten umfasst. Die eine Platte ist an einem Ende des Gleitschutzelements befestigt und mit Haken versehen. Am anderen Ende des Gleitschutzelements ist die andere Platte mit Öffnungen befestigt. An dieser ist eine Zunge mit einer weiteren Platte ausgebildet, die in die Zunge eingeschoben ist. Diese weitere Platte ist drehbar angebracht und zwar vermittels eines Bolzens. Hierbei sind Öffnungen zum Eingriff bzw. Durchgriff der Haken vorgesehen. Wird ein solches Gleitschutzelement an das Fahrzeugrad angelegt, so zieht es sich selbsttätig auf dieses auf, wobei Wulste an den Seiten des Gleitschutzelements für den Zusammenhalt des Gleitschutzelements mit dem Reifen sorgen. Zum Abschluss des Vorgangs werden die beiden Enden des Gleitschutzelements durch das Schloss miteinander verbunden. Dabei greifen Haken der einen Platte durch die Öffnungen in die Öffnungen der anderen Platte ein. Der eigentliche Verschluss wird durch eine durch Federn bewirkte Bewegung der Platten relativ zueinander erreicht. Bei dieser Konstruktion ist nachteilhaft, dass die beiden Enden des Gleitschutzelements einmal miteinander verbunden werden müssen und dann eine Verstellung der Spannung des Gleitschutzelements nicht mehr ohne weiteres durchgeführt werden kann.

Aufgabe der Erfindung ist es, eine Vorrichtung zum selbsttätigen Aufziehen eines Gleitschutzelements bereitzustellen, welche ein Verstellen der Spannung des Gleitschutzelements erlaubt, während dieses auf das Fahrzeugrad aufgezogen und durch das Kettenschloss abgeschlossen ist, sogar während des Betriebs des Fahrzeugs.

Diese Aufgabe wird erfindungsgemäß durch die Maßnahmen im kennzeichnenden Teil des Anspruches 1 gelöst, wobei zweckmäßige Weiterbildungen der Vorrichtung durch die in den Unteransprüchen angegebenen Maßnahmen gekennzeichnet sind.

Nach Maßgabe der Erfindung wird ein insbesondere in Form einer Schneekette vorliegendes Gleitschutzelement geschaffen, welches an einem Ende ein am Fahrzeugrad bzw. am Fahrzeugreifen über vorzugsweise Klemmbügel fixierbares Aufspannelement aufweist und am anderen Kettenende ein mit dem Aufspannelement verkoppelbares Verbindungselement besitzt. Das Aufspannelement wird in Längsrichtung vor das entsprechende Rad gelegt, wobei die Kette gestreckt ist. Das Aufspannelement wird am Fahrzeugrad befestigt, indem es über die Klemmbügel bzw. den Klemmbügel am Fahrzeugreifen aufgeklemmt wird. Dann braucht lediglich das Fahrzeug über die Kette gefahren zu werden. Am Ende greift das Verbindungselement in das Aufspannelement, wozu vorzugsweise ein am Verbindungselement ausgebildetes Hakenelement dient, welches in eine entsprechende Lasche (Spannelement) greift, wobei dieser Kopplungsvorgang über einen Magneten zur Erzeugung einer Haftverbindung unterstützt wird. Mit Weiterrollen des Rads erfolgt dann eine Kettenspannung, und zwar dergestalt, daß zwischen Verbindungselement und Aufspannelement ein Klemmund/oder Verspannungseingriff erfolgt. Hierbei ist zweckmäßigerweise innerhalb des Aufspannelements ein vorzugsweise als Schlitten ausgebildetes Schloßteil vorgesehen, welches relativ innerhalb des Aufspannelements verschiebbar ist. Dieses Schloßteil ist über eine Rasteinrichtung mit dem Aufspannelement verbunden, wobei die Rasteinrichtung in einer Richtung wirkt. Mit Umdrehung des Rades erfolgt aufgrund des Schlupfes zwischen Kette und Rad eine relative Verschiebung zwischen Schloßteil und Aufspannelement, wobei das Schloßteil relativ zum Aufspannelement so zwangsweise verfahren wird, daß sich der Kettendurchmesser quasi verkleinert, indem das Schloßteil entsprechend weit in das Aufspannelement zwangsweise mit Bewegung des Fahrzeugs bzw. das Abwälzen des Rads verfahren wird. Hierbei erfolgt eine Verklemmung bzw. Verspannung, die durch einen Rastmechanismus gesperrt wird, so daß diese Verspannung bzw. Verklemmung nicht mehr rückgängig gemacht werden kann. Hierzu eignet sich insbesondere ein Sägezahnelement, welches mit einem Federbügel oder dergleichen als Rastelement zusammenwirkt. Eine solche Ausbildung hat den Vorteil, daß die Kette ganz einfach dadurch gelöst werden kann, indem der Federbügel außer Rasteingriff mit dem Sägezahnelement gedrückt wird.

In diesem Zusammenhang ist von Vorteil, daß die Koppelung zwischen dem Verbindungselement und dem Aufspannelement bzw. dem Schloßoberteil, die durch Formschluß infolge Eingriffs eines Hakenelements in eine entsprechende Lasche oder dgl. erfolgt, durch Magnetwirkung zur Erzeugung einer entsprechenden Haftverbindung unterstützt wird. Dies kann dadurch erreicht werden, daß ein geeigneter Magnet entweder am Schloßteil bzw. am Aufspannelement oder dem Verbindungselement angeordnet wird, wobei selbstverständlich die entsprechenden Gegenteile aus Metall sein müssen. In diesem Zusammenhang ist ferner von Vorteil, daß die Kette im wesentlichen aus zwei Längssträngen gebildet ist, die durch entsprechende Kettenglieder in Querrichtung verbunden sind. Ein stabiler Halt ist hierbei über gesonderte Querbügel erreicht, die sich zwischen den beiden Längsgliedern der Strecke erstrecken, dort befestigt sind und im übrigen der Kontur des Fahrzeugsreifens angepaßt sind.

Das Aufbringen der Kette ist demnach denkbar einfach. Es muß lediglich das Aufspannelement gegen den Fahrzeugreifen gedrückt werden, so daß vorzugsweise über den Klemmbügel die Festlegung am Fahrzeugreifen bzw. Fahrzeugrad erfolgt. Es wird dann das Fahrzeug je nach Auslegung der Kette nach vorne oder nach hinten verfahren, wodurch sich die Kette um das Rad wickelt. Am Ende des Wickelvorgangs kommt das hakenförmig ausgebildete Verbindungselement insbesondere über die Haftwirkung des Magneten mit dem Aufspannelement bzw. dem darin angeordneten Schloßteil in Verbindung und verhakt sich bzw. verkoppelt sich mit diesem. Bei weiterem Abrollen des Rads, also bei Weiterfahrt des Fahrzeugs, erfolgt die Verspannung durch Relativverschiebung des Schloßteils gegenüber dem Aufspannelement, wodurch die Kette gespannt wird. Dieser Spannvorgang der Kette wird über die Rasteinrichtung gesichert, ohne daß irgendeine manuelle Handhabung erforderlich wäre. Das Lösen der Kette ist einfach dadurch möglich, daß die Rasteinrichtung ausgeklinkt wird.

In einer besonders bevorzugten Ausführungsform der Erfindung, die im übrigen auch in anderen Schneekettenkonstruktionen verwendet werden kann, ist zwischen dem Klemmbügel und dem Aufspannelement ein vorzugsweise als Druckfeder ausgebildetes Vorspannelement angeordnet, welches den Klemmbügel in eine Stellung vorspannt, in der der Klemmbügel auf das Fahrzeugrad aufgesteckt bzw. aufgeklemmt werden kann, in welcher die beiden U-Schenkel des Klemmbügels die beiden Radflanken bzw. Radwülste übergreifen und dadurch das Aufspannelement am Fahrzeugrad halten. Infolge der federnden Vorspannung kann der Klemmbügel infolge der sich beim Fahren des Fahrzeuges aufbauenden Kräfteverhältnisse aus seiner Anlageposition am Fahrzeugrad wegschwenken, so daß die beiden U-Schenkel während der Fahrt nicht an den beiden Radflanken des Fahrzeugrades anliegen. Sie sind im wesentlichen hierbei entgegen der Federvorspannung in eine Position geschwenkt, in welcher der Klemmbügel im wesentlichen parallel zur gegenüberliegenden Radlauffläche verläuft. Dadurch wird einerseits das Fahrzeugrad geschont und andererseits auch der Klemmbügel. Nach dem Lösen des Aufspannelementes vom Fahrzeugrad wird der Klemmbügel infolge der Federvorspannung wieder in seine Ausgangsposition gedrückt, so daß das Aufspannelement sich in einer Position befindet, in welcher der Klemmbügel auf das Fahrzeugrad erneut aufgesteckt werden kann.

Nachfolgend werden Ausführungsbeispiele der Erfindung anhand der Zeichnung beschrieben. Darin zeigen:
- Figur 1: eine perspektivische Schemaansicht des Kettenschlosses,
- Figur 2: eine Draufsicht in schematischer Ansicht auf eine Kette in gestreckter Stellung, wie sie zum Aufbringen auf das Fahrzeugrad verwendet wird,
- Figur 3: eine Seitenansicht des im Aufspannteil aufgenommenen Schloßteils,
- Figur 4: eine Seitenansicht des Verbindungselements und
- Figur 5: eine Teilansicht des Verbindungselements nach Figur 4 von unten her gesehen.
- Figur 6: eine perspektivische Schemaansicht einer weiteren Ausführungsform eines Kettenschlosses.

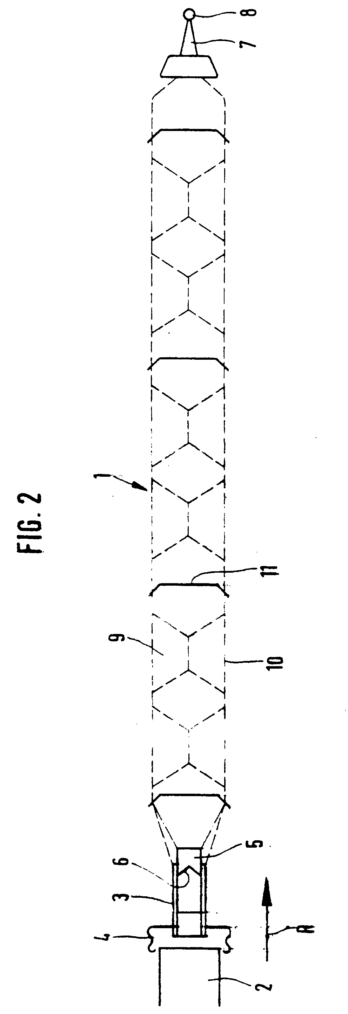

Figur 2 zeigt schematisch die Schneekette 1 in gestreckter Lage, wobei bei 2 das Fahrzeugrad angedeutet ist und mit R die Richtung des Kraftfahrzeugs angegeben ist, in der dieses zum Aufbringen der Kette bewegt werden muß.

Die Kette 1 weist an einem Ende ein mit 3 bezeichnetes Aufspannelement auf, an welches gelenkig ein mit 4 bezeichneter Aufspannbügel angeordnet ist, welcher in etwa der Kontur des Reifens angepaßt ist, auf welchen die Schneekette aufgezogen werden soll. Innerhalb des Aufspannelements 3 ist ein Schloßteil 5 angeordnet, welches, wie im folgenden noch näher beschrieben wird, in Art eines innerhalb von Führungen des Aufspannelements verschiebbaren Schlittens ausgebildet ist. Aus Figur 2 ist ohne weiteres ersichtlich, daß die Schneekette 2 vermittels ihrer beiden durchgehenden Längsglieder 9 und 10 am Aufspann- und am Verbindungselement angekoppelt ist. Die Kettenglieder der Schneekette 1 sind hierbei der Einfachheit halber strichliert dargestellt. Im Aufspannelement ist rein schematisch eine Lasche 6 angedeutet, welche für den Eingriff des am anderen Kettenende angeordneten Verbindungselements 7 dient. Das Verbindungselement 7 weist hierzu ein im folgenden noch näher beschriebenes Hakenelement auf.

Im dargestellten Ausführungsbeispiel besteht die Schneekette im übrigen aus den beiden bereits erwähnten Längsgliedern 9 und 10, die über Kettenquerglieder 11 miteinander verbunden sind. Im dargestellten Ausführungsbeispiel erfolgt die Verbindung beidseitig über je zwei Kettenglieder und ein mittig angeordnetes Kettenglied. Ferner sind in Abständen Querbügel 11 angeordnet, die für die Erzielung eines seitlichen Halts und damit zur Stabilisierung der Kette auf dem Fahrzeugreifen dienen. Die Querglieder 11 können aus stabilem Kunststoff oder auch aus Metall oder dergleichen hergestellt sein. Im dargestellten Ausführungsbeispiel sind sie mit ihren beiden Enden an den Längsgliedern 9 und 10 befestigt und weisen im übrigen eine weitgehend dem Fahrzengreifen angepaßte Kontur, hier im wesentlichen U-Form mit leicht schräg nach außen verlaufen den Schenkeln, auf, um die seitliche Stabilität der Kette und damit das Halten der Kette auf dem Fahrzeugreifen zu unterstützen. Die Anordnung und Ausbildung der Querglieder ist rein repräsentativ, was auch für die Anzahl der Querglieder 11 gilt, wobei im dargestellten Ausführungsbeispiel vier Querglieder verwendet sind, die im wesentlichen aus stabilem, schlagfestem Kunststuff hergestellt sind.

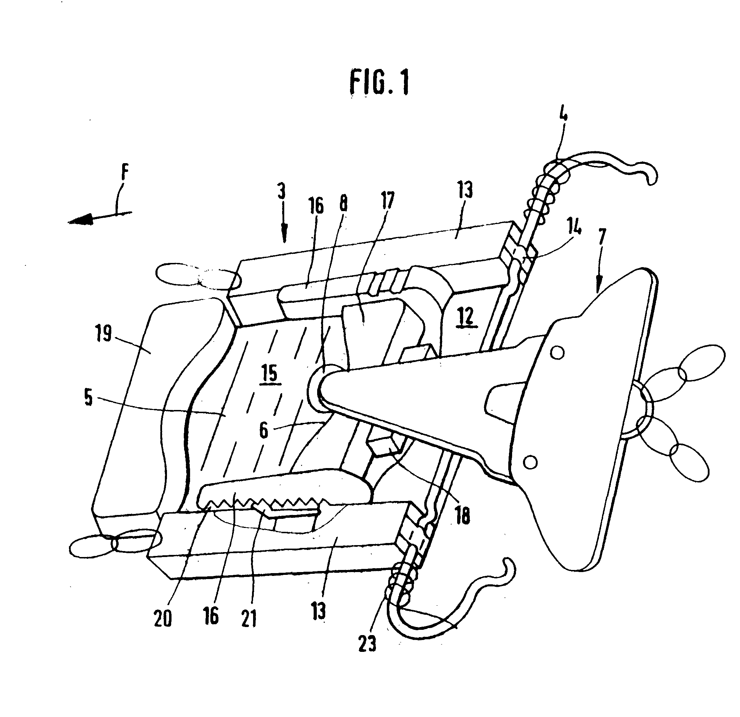

Figur 1 zeigt das Kettenschloß bestehend aus Aufspannelement 3, Schloßteil 5 und Verbindungselement 7 sowie Klemmbügel 4 in Kopplungs- bzw. Verbindungsstellung, also in Gebrauchsstellung der Schneekette auf dem Fahrzeugrad.

Das Aufspannelement 3 besteht hierbei im wesentlichen aus einem Bodenelement 12 mit seitlich angeordneten Führungsleisten 13 für das als Schlitten ausgebildete Schloßteil 5, welches zwischen den Führungsleisten 13 geführt und aufgenommen ist. Am Aufspannelement 3 ist ferner ein bezüglich des Reifens bzw. des Rads konturangepaßter Klemmbügel 4 gelenkig bei 14 gelagert bzw. angeordnet.

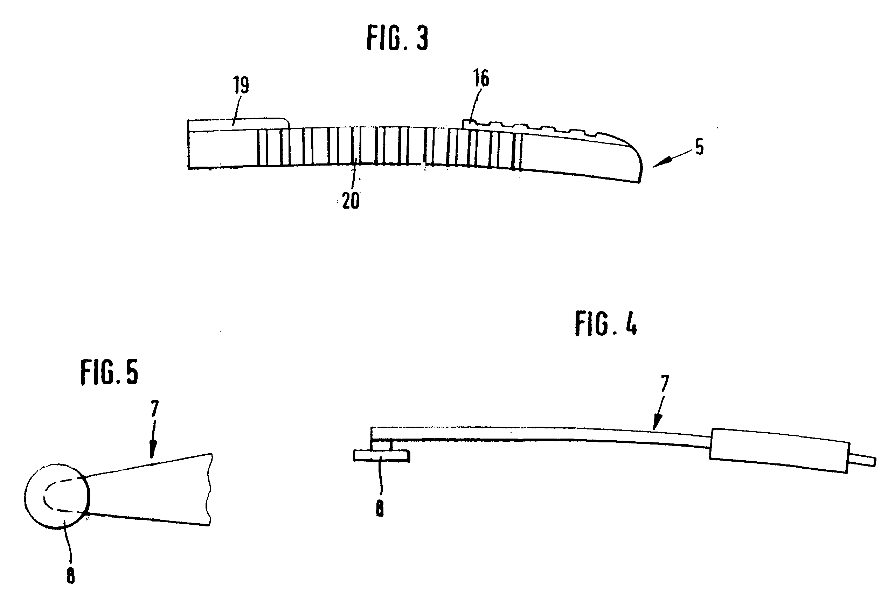

Das im dargestellten Ausführungsbeispiel als Schlitten ausgebildete Schloßteil 5 weist eine Bodenplatte 15 auf und seitliche Längsglieder 16, die bezüglich der Führungsglieder 13 des Aufspannelements 3 erhaben ausgebildet sind, also dikkenmäßig über die Führungsglieder 13 nach außen vorstehen, so daß in der dargestellten gekoppelten Stellung nur das Schloßteil in Kontakt mit der Fahrbahnfläche gelangt, nicht jedoch das Aufspannelement. Hierzu ist es zweckmäßig, wenn, wie lediglich abschnittsweise angedeutet, die Längsglieder 16 profiliert, hier in Art eines balligen Zahnprofils ausgebildet sind, um den Eingriff mit der Fahrbahnfläche zu erhöhen. Für die Kopplung mit dem Verbindungselement dient vornehmlich eine an einem Querteil 17 ausgebildete Lasche mit Hinterschneidung, in welche ein hier als kreisförmiges Hakenelement ausgebildetes Teil 8 eingreift, welches an einem spitz- bzw. schnabelförmig gestaltetem Ende des Verbindungselements 7 angeordnet ist. Der Aufban ergibt sich besonders deutlich aus den Figuren 4 und 5. Am Querglied 17 ist ein Magnet 18 angeordnet, der für eine Haftverbindung mit dem metallisch ausgebildeten Schnabel des Verbindungselements 7 dient. Zur Stabilisierung des Schlittens bzw. des Schloßteils ist bei 19 ein weiteres Querglied dargestellt, welches gleichfalls wie die Längsglieder 16 erhaben ausgebildet ist. Ersichtlich sind die Längsglieder der Kette an den Führungsleisten 13 angelenkt, wobei auf der anderen Seite die Anlenkung der zusammengeführten Kettenlängsglieder am Verbindungselement 7 deutlich ersichtlich ist.

Figur 1 zeigt recht deutlich die Rasteinrichtung, der für die Kettenspannung verantwortlich ist. Hierzu ist im dargestellten Ausführungsbeispiel an einer der Längsleisten 16 ein mit 20 bezeichnetes Sägezahnprofil ausgebildet. Mit diesem Sägezahnprofil wirkt ein im Bereich einer der Führungsleisten 13 angeordneter Federbügel 21 als Rastelement zusammen, der federnd vorgespannt sein oder in geeigneter Weise ausgebildet bzw. angeordnet sein kann.

Die Einrichtung läßt sich am besten anhand der Figur 1 erläutern. Nach Aufbringen des Aufspannelements wird das Kraftfahrzeug verfahren, so daß die Kette auf den Fahrzeugreifen aufgebracht wird. Nach beinahe einer vollen Umdrehung gelangt selbsttätig das Verbindungselement 7 in Anlage an das Aufspannelement, wobei über Magnetwirkung das Verbindungselement an das Schloßteil herangezogen wird und mit Verfahren des Rads das Hakenelement 8 in Eingriff mit der Lasche 17 gelangt. Mit Weiterrollen des Rads, insbesondere beim Beschleunigungsvorgang des Fahrzeugs, erfolgt infolge des vorhandenen Schlupfs zwischen Kette und Rad und Kontakts des Schloßteils mit der Fahrbahnfläche zwangsweise ein Verschieben des Schloßteils 5 relativ zum Aufspannelement 3 in Pfeilrichtung F, wodurch die Kette entsprechend gespannt wird. In entsprechend vorgerückter Stellung des als Schlitten ausgebildeten Schloßteils 5 wird hierbei über die Rasteinrichtung gesichert, der in einer Richtung sperrt, also in einer Richtung entgegen Pfeilrichtung F, was infolge Eingriffs des Federbügels 21 oder eines entsprechenden äquivalenten Bauteils am Sägezahnprofil oder entsprechend äquivalenten Bauteil erfolgt. D.h., die entsprechende Kettenspannung kann aufgrund der ratschenartigen Einrichtung ohne zusätzlichen Eingriff nicht mehr gelöst werden. Es kommt somit zu einem entsprechenden und dauerhaften Verspannen der Kette um das Rad, was völlig selbsttätig ohne manuellen Eingriff erfolgt. Zum Lösen der Kette braucht lediglich der Federbügel 21 ausgerückt zu werden, was in einfacher Weise beispielsweise dadurch erfolgen kann, daß eine am Federbügel 21 befestigte und nach außen geführte Lasche nach außen gezogen oder ein Schwenkhebelmechanismus, Druckmechanismus oder dgl. verwendet wird. Wesentlich bei der Erfindung ist somit die durch den Rastmechanismus je nach Kettenspannung, die selbsttätig erfolgt, bewirkte Sicherung der Klemm- bzw. Verspannungsstellung der Kette. Die Kette kann somit selbsttätig aufgezogen werden und es braucht lediglich am Anfang das Aufspannelement über den Klemmbügel nur an das Rad gedrückt zu werden, was allerdings bei entsprechender Auslegung durch Anfahren mit dem Rad erfolgen kann.

Aus Figur 3 ist das lediglich hier beispielshalber anhand des bevorzugten Ausführungsbeispiels dargestellte Sägezahnprofil 20 erläutert, wobei aus Figur 3 auch die erhabene Ausbildung des Schloßteils infolge der nach oben vorstehenden Längsglieder 16 und des Querteils 19 ersichtlich ist. Selbstverständlich kann anstelle des Sägezahnprofils 20 auch jede andere geeignete einseitig sperrende Rasteinrichtung verwendet werden, etwa ein Keilmechanismus oder eine in Öffnungen oder Schlitze einrückbare Rastfeder und dgl.

Ferner ist es im Rahmen der Erfindung zweckmäßig, wenn das Aufspannelement und das Schloßteil eine gewisse leichte Krümmung in Anpassung an die Kontur des Fahrzeugrads aufweisen.

Ein maßgebliches Element in der Kettenspannung ist die einseitig gesicherte Rasteinrichtung Wesentlich ist ferner der Eingriff des Verbindungselements über ein Hakenelement mit dem Schloßteil, und zwar in Initiierung über eine Haftverbindung, die in vorteilhafter Weise über einen Magneten verwirklicht wird. Wesentlich ist ferner, daß die Kette in sehr einfacher Weise sich lediglich aus zwei Längsgliedern und geeigneten Quergliedern zusammensetzt, wobei zur Stabilisierung des Halts der Kette auf dem Fahrzeugreifen konturangepaßte Querglieder in Abständen vorgesehen sind.

Wesentlich ist ferner, daß das Aufspannen der Kette sowohl in vorwärtiger Fahrtrichtung wie auch in der rückwärtigen Fahrtrichtung erfolgen kann.

Selbstverständlich ist die Länge des Aufspannelements und des Schloßoberteils, insbesondere des Rastmechanismus der erforderlichen Kettenspannung angepaßt, um einerseits dem Umstand Rechnung zu tragen, daß die Kette von ihrem Umfang her einfach auf das Rad aufgebracht werden muß und andererseits eine entsprechende Verspannung zum Zwecke der Stabilisierung des Halts der Kette auf dem Fahrzeugreifen erforderlich ist, was jedenfalls über den Klemmweg des Radmechanismus aufgefangen werden muß.

Figur 1 zeigt ferner ein mit 23 bezeichnetes Vorspannelement, welches im dargestellten Ausführungsbeispiel als Druckfeder ausgebildet ist und durch welches der Klemmbügel 4 in seine Aufsteckposition geklemmt wird, in welcher der Klemmbügel für das Anlegen der Kette auf das Fahrzeugrad aufsteckbar ist. In dieser Position ist der Klemmbügel, der im wesentlichen U-förmig ausgebildet ist, im wesentlichen so zur Hauptebene des Aufspannelementes 3 gerichtet, daß die durch den Klemmbügel 4, also durch seine beiden U-Schenkel und den U-Steg aufgespannte Ebene im wesentlichen senkrecht zum Aufspannelement ausgerichtet ist oder jedenfalls so zum Aufspannelement ausgerichtet ist, daß das Aufspannelement auf die Radlauffläche aufsetztbar und hierbei der Klemmbügel 4 über das Rad gesteckt werden kann, so daß die beiden U-Schenkel der beiden Radflanken übergreifen und damit das Aufspannelement gesichert auf das Fahrzeugrad aufklemmbar ist.

Hierbei erfolgt die Ausrichtung des Klemmbügels relativ zum Aufspannelement in federnder Vorspannung. Dadurch kann sich der Klemmbügel nach erfolgtem Auflegen der Kette auf das Fahrzeugrad aufgrund der sich beim weiteren Abrollen des Fahrzeugrades aufbauenden Kräfte vom Radwulst wegschwenken, so daß die beiden U-Schenkel des Klemmbügels 4 nicht länger an den beiden Radflanken anliegen. Das heißt, nach dem Aufziehen der Kette schwenkt der Klemmbügel gegen die Vorspannung der Druckfeder in eine Position weg von den beiden Radflanken, so daß sich der Klemmbügel dann mit seiner durch die U-Schenkel aufgespannten Ebene im wesentlichen parallel zur Radlauffläche des Fahrzeugrades befindet.

Wird nach dem Lösen der Kette das Aufspannelement 3 vom Fahrzeugrad abgenommen, so schwenkt der Klemmbügel 4 infolge der Federvorspannkraft wieder in seine Ausgangsposition zurück, in welcher sich der Klemmbügel im wesentlichen in Aufsteckstellung befindet, so daß sich das Aufspannelement für ein erneutes Anlegen der Kette an das Fahrzeugrad in seiner Aufsteckposition befindet.

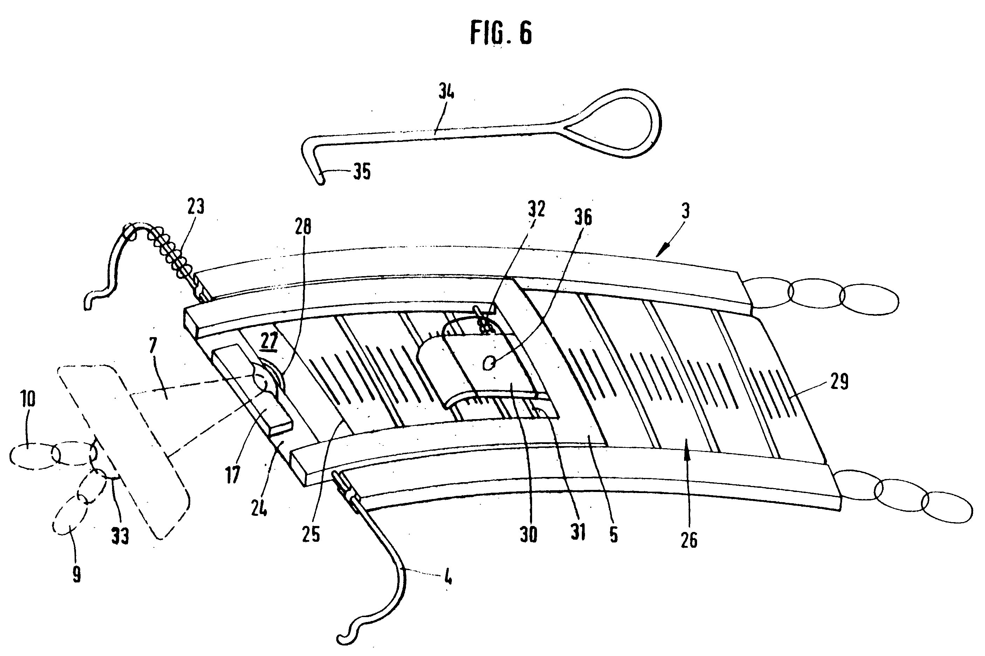

Figur 6 zeigt eine weitere Ausführungsform eines Kettenschloßes, welches insbesondere geeignet ist, wenn die Kette auf einer schräg verlaufenden Fahrbahn, etwa im bergigen Gelände, aufgelegt werden soll. Hierbei werden für vergleichbare Bauteile dieselben Bezugszeichen wie im vorherigen Ausführungsbeispiel verwendet. Demnach ist im Aufspannelement 3 ein in Art eines Schlittens ausgebildetes Schloßteil 5 verschieblich aufgenommen, das im wesentlichen U-förmig ausgestaltet ist, wobei die beiden U-Schenkel am freien Ende über einen Quersteg 24 miteinander verbunden sind, der die Aufnahmelasche 17 für die Aufnahme des Hakenelementes des hier nur strichliert angedeuteten Verbindungselementes 7 trägt. Figur 6 zeigt hierbei die Position, in der das Aufspannelement 3 über den Klemmbügel 4 am Rad befestigt bzw. angeklemmt wird. In dieser Stellung befindet sich das Schloßteil 5 in einer vorgerückten Lage relativ zum Aufspannelement 3, so daß sich zwischen dem Quersteg 24 und dem gegenüberliegenden Ende 25 des Bodenteiles 26 des Aufspannelementes 3 ein freier Raum bzw. eine Lücke 27 befindet. Diese Lücke 27 überbrückt der Klemmbügel 4 mit seinem mittleren Abschnitt, der in Richtung des Schloßteiles 5 eine hakenförmige Biegung aufweist, die ein Sperrglied 28 bildet. Dieses Sperrglied 28 liegt in der in Figur 6 gezeigten Position am Quersteg 24 an. Dadurch ist während des Auflegens der Kette durch langsames Abrollen des Fahrzeugrades das Schloßteil 5 gesperrt, so daß es nicht relativ zum Aufspannelement 3 sich verschieben kann, mithin eine vorzeitige Kettenspannung ausgeschlossen ist. Vielmehr ist eine definierte Position des Schloßteiles 5 während der Phase des Aufrollens der Kette auf das Rad unter schwierigsten Verhältnissen, insbesondere bei bergiger Anfahrt, gewährleistet, so daß es zu einem sicheren Eingriff des Hakenelementes des Verbindungselementes 7 in die entsprechende Aufnahmelasche 17 kommt. Erst nach Weiterfahrt, also nach Beschleunigung des Fahrzeuges, gelangt der Klemmbügel 4 entgegen der Vorspannung der Druckfeder 23 außer Eingriff mit dem Fahrzeugrad, wodurch das Sperrglied 28 vom Querteil 24 weggeschwenkt wird und damit unter den sich aufbauenden Kräfteverhältnissen das Schloßteil 5 relativ zum Aufspannelement 3 verschoben und damit die Kette gespannt wird.

Weiterhin ist beim Ausführungsbeispiel der Figur 6 die Rasteinrichtung für die Spannung der Kette unterschiedlich ausgebildet, indem sägezahnartige Kerben 29 hintereinander in der Bodenplatte 26 des Aufspannelementes 3 vorgesehen sind und nicht in den Seitenteilen, wie im Ausführungsbeispiel nach Figur 1. Der Rasteingriff erfolgt über einen zungen- oder laschenartigen Rasthaken 30 des Schloßteiles 5, der hier über einen Bolzen 31 an den beiden gegenüberliegenden Schenkeln des Schloßteiles 5 gelenkig aufgenommen ist. Über eine Druckfeder 32, die hier um den Bolzen 31 gewickelt ist, wird der Rasthaken 30 in seiner Eingriffstellung mit den Kerben bzw. Nuten 29 vorgespannt. Durch diese Ausführung ergibt sich eine größere Rasteingriffsfläche, was erhöhte Stabilität gewährleistet. Auch bei dem in Figur 6 dargestellten Verbindungselement 7, sind die beiden Kettenglieder 9 und 10 im wesentlichen punktuell, also an einem Punkt bei 33 am Verbindungselement 7 befestigt, was sicherstellt, daß das Verbindungselement 7 mit dem Hakenelement exakt in Richtung auf die Lasche 17 während des Aufrollens der Kette geführt bzw. gehalten ist, so daß über die magnetisch wirksame Lasche 17 das Hakenelement des Verbindungselementes 7 sicher in die Lasche eingreifen kann.

Mit 34 ist schließlich ein Werkzeug bzw. ein Schlüssel bezeichnet, der zum Lösen der Kettenspannung für die Demontage der Kette dient. Hierzu wird der Schlüssel 34 mit seinem vorderen Ende 35 in eine entsprechende Öffnung bzw. Bohrung 36 des Rasthakens 30 eingeführt, gedreht, so daß der Rasthaken 30 in einfacher Weise außer Eingriff mit der entsprechenden Rastkerbe 29 geschwenkt werden kann. Danach kann ohne weiteres das Schloßteil 5 nach hinten, also in der Darstellung nach links verschoben werden, so daß dann das Verbindungselement 7 ausgehakt und die Kette abgenommen werden kann.

Die Kettenspannung kann auch durch einen anderen Mechanismus erfolgen, wie etwa kraftschlüssiger Spannmechanismus, insbesondere unter Reibeingriffswirkung, wie etwa eine sich kegelartige Verengung am Aufspannelement (3), in welche ein entsprechendes Schloßteil (5) eingedrückt wird. Beispielsweise kann die Verspannung durch ein entsprechendes Zusammendrücken des Schloßteiles (5) beim Verschieben in die Einengung des Aufspannelementes (3) erfolgen oder durch sonstige Deformation, die sich wieder abbaut, sobald für die Demontage der Kette das Schloßteil (5) aus dem Aufspannelement (3) gezogen wird.

## Patentansprüche

1. Vorrichtung zum selbsttätigen Aufziehen eines Gleitschutzelements, insbesondere einer Schneekette, auf ein Fahrzeugrad, mit einer um das Fahrzeugrad legbaren Kette, deren beide Kettenenden durch ein Kettenschloss miteinander verbindbar sind, **dadurch gekennzeichnet, dass** an dem einen Kettenende ein am Fahrzeugrad festlegbares Aufspannelement (3) und an dem anderen Kettenende ein Verbindungselement (7) zu diesem angeordnet ist, wobei das Aufspannelement (3) mit dem Verbindungselement (7) über eine in einer Richtung sperrende Rasteinrichtung (20, 21; 29, 30) in Verbindung steht.

2. Vorrichtung nach Anspruch 1, **dadurch gekennzeichnet, daß** das Aufspannelement (3) ein zum Schließen des Kettenschlosses mit dem Verbindungselement (7) verkuppelbares Schloßteil (5) aufweist, welches infolge Radumdrehung mit dem Aufspannelement verklemm- und/oder verspannbar ist.

3. Vorrichtung nach Anspruch 1 oder 2, **dadurch gekennzeichnet, daß** das Schloßteil (5) im Aufspannelement (3) verschiebbar aufgenommen (in Art eines Schlittens).

4. Vorrichtung nach einem der vorhergehenden Ansprüche, **dadurch gekennzeichnet, daß** die Rasteinrichtung durch mindestens ein mit einem Rastelement (21) zusammenwirkendes Profilelement, insbesondere in Art eines Sägezahnelements (20) gebildet ist, wobei das Rastelement auf dem Aufspannelement und das Sägezahnelement (20) auf dem als im Aufspannelement (3) geführten Schlitten ausgebildetes Schloßteil (5) ausgebildet bzw. angeordnet ist.

5. Vorrichtung nach einem der vorhergehenden Ansprüche, **dadurch gekennzeichnet, daß** das Schloßteil (5) so ausgebildet ist, daß das Schloßteil in Anordnung mit dem Aufspannelement (3) das Kontaktglied zur Fahrbahnfläche bildet.

6. Vorrichtung nach Anspruch 5, **dadurch gekennzeichnet, daß** das Kontaktglied über das Aufspannelement dickenmäßig in Richtung auf die Fahrbahn vorsteht.

7. Vorrichtung nach einem der vorhergehenden Ansprüche, **dadurch gekennzeichnet, daß** das Aufspannelement (3) durch einen vorzugsweise gelenkig daran angeordneten Klemmbügel (4) am Rad festlegbar ist, der das Rad seitlich umgreift.

8. Vorrichtung nach einem der vorhergehenden Ansprüche, **dadurch gekennzeichnet, daß** das Verbindungselement (7) mit einem nach selbsttätigem Aufbringen der Kette in eine Lasche (6) im Schloßteil (5) des Aufspannelements einrastbaren Hakenelement (8) versehen ist.

9. Vorrichtung nach Anspruch 8, **dadurch gekennzeichnet, daß** das Schloßteil (5) und/oder das Verbindungselement (7) mit einem Magneten (18) für eine Haftverbindung zwischen Verbindungselement und Aufspannelement bzw. Schloßteil ausgebildet ist.

10. Vorrichtung nach einem der vorhergehenden Ansprüche, **dadurch gekennzeichnet, daß** die Kette zwei durchgehende Längsstränge (9,10) aufweist, die quer durch im Abstand angeordnete Kettenglieder verbunden sind, sowie der Kontur des Fahrzeugreifens angepaßte Querglieder (11) zwischen den beiden Längssträngen vorgesehen sind.

11. Vorrichtung nach einem der vorhergehenden Ansprüche **dadurch gekennzeichnet, daß** der am Aufspannelement (3) dreh- bzw. verschwenkbar gelagerte Klemmbügel (4) durch ein Vorspannelement (23) in eine Aufsteckposition vorgespannt ist, in der der Klemmbügel (4) auf das Fahrzeugrad aufklemmbar ist.

12. Vorrichtung nach Anspruch 11, **dadurch gekennzeichnet, daß** in Aufsteckposition die durch die beiden U-Schenkel und den U-Steg des Klemmbügels (4) aufgespannte Ebene im wesentlichen senkrecht zum Aufspannelement (3), d.h., im wesentlichen senkrecht zur Radlauffläche, gerichtet ist.

13. Vorrichtung nach Anspruch 11 oder 12, **dadurch gekennzeichnet, daß** das Vorspannelement (23) durch ein Federelement gebildet ist, welches den Klemmbügel (4) federnd in die Aufsteckposition vorspannt.

14. Vorrichtung nach einem der Ansprüche 11 bis 13, **dadurch gekennzeichnet, daß** das Federelement bzw. das Vorspannelement (23) durch eine Druckfeder gebildet ist, die sich einerseits gegenüber dem Aufspannelement (3) und andererseits gegenüber dem Klemmbügel (4) abstützt.

15. Vorrichtung nach einem der vorhergehenden Ansprüche, **dadurch gekennzeichnet, daß** das Kettenschloß ein Sperrglied (28) aufweist, welches in der Phase des Aufrollens der Kette auf das Fahrzeugrad das Schloßteil (5) an einer Relativverschiebung gegenüber dem Ausspannelement (3) sperrt.

16. Vorrichtung nach Anspruch 14, **dadurch gekennzeichnet, daß** das Sperrglied am Klemmbügel (4) vorgesehen ist, vorzugsweise gebildet durch eine hakenartige Ausbiegung, wobei das Sperrglied (28) an einem Teil des Schloßteiles (5) anliegt, vorzugsweise am Quersteg (24).

## Claims

1. Device for automatic application of a wheel slide protection element, particularly of a snow chain, onto a wheel of a vehicle, with a chain applicable around the vehicle wheel, where both ends of the chain can be connected by means of a chain lock, **characterized in that** a clamping element (3) is placed at one end of the chain attachable to the vehicle wheel and a connecting element (7) is placed to it at the other end of the chain, whereby the clamping element (3) is linked to the connecting element (7) by means of a notch device (20, 21; 29, 30) locking unidirectionally.

2. Device according to claim 1, **characterized in that** the clamping element (3) features a lock component (5) that can be coupled to the connecting element (7) to shut the chain lock, whereby this lock component (5) can be clamped and/or distorted by the clamping element as a result of the wheel rotation.

3. Device according to claim 1 or 2, **characterized in that** the lock component (5) is taken up in an adjustable manner in the clamping element (3) (in form of a sledge).

4. Device according to one of the previous claims, **characterized in that** the notch device features at least one profile element cooperating with a notch element (21), particularly in form of a saw tooth element (20), whereby the notch element is placed respectively arranged onto the clamping element and the saw tooth element (20) is placed respectively arranged onto the lock component (5) in form of a sledge controlled by the clamping element (3).

5. Device according to one of the previous claims, **characterized in that** the lock component (5) is formed in such a way that the lock component in order with the clamping element (3) represents the contact link to the carriage way surface.

6. Device according to claim 5, **characterized in that** the contact link protrudes in thickness from the clamping element towards the direction of the carriage way.

7. Device according to one of the previous claims, **characterized in that** the clamping element (3) can be attached to the wheel through a clamping yoke (4), preferably jointed onto it that encompasses the wheel laterally.

8. Device according to one of the previous claims, **characterized in that** the connecting element (7) is furnished with a hook element (8) snapping in a mounting link (6) in the lock component (5) after automatic application of the chain.

9. Device according to claim 8, **characterized in that** the lock component (5) and/or the connecting element (7) features a magnet (18) for a non-load-bearing joint between the connecting element and the clamping element respectively the lock component.

10. Device according to one of the previous claims, **characterized in that** the chain features two continuous longitudinal lines (9, 10), that are transversely connected through chain links placed in intervals, as well as transverse links (11) adjusted to the tire profile of the vehicle between both longitudinal lines.

11. Device according to one of the previous claims, **characterized in that** the rotating respectively pivoting clamping yoke (4) located at the clamping element (3) is pre-stressed in a detachable position through a pre-stressed element (23), in which position the clamping yoke (4) can be clamped onto the wheel of the vehicle.

12. Device according to claim 11, **characterized in that** the section clamped by both U-shaped legs and U-shaped webs of the clamping yoke (4) is in the detachable position basically directed perpendicularly to the clamping element (3), that means, basically perpendicular to the wheel housing surface.

13. Device according to claim 11 or 12, **characterized in that** pre-stressed element (23) features a spring element that pre-stresses the clamping yoke (4) elastically into the detachable position.

14. Device according to one of the claims 11 to 13, **characterized in that** the spring respectively pre-stressed element (23) is formed by a pressure spring supporting itself on the one hand against the clamping element (3) and on the other hand against the clamping yoke (4).

15. Device according to one of the previous claims, **characterized in that** the chain lock features a locking link (28), which locks the lock component (5) at a relative displacement against the clamping element (3) during rolling up the chain onto the wheel of the vehicle.

16. Device according to claim 14, **characterized in that** the locking link is disposed at the clamping yoke (4), preferably formed by an hook-like bending, whereby the locking link (28) is adjacent to one part the lock component (5), preferably to the transverse web (24).

## Revendications

1. Dispositif pour la élévation automatique des éléments antidérapantes, particulièrement d'une chaîne a neige, sur une roue d'un véhicule, avec une chaîne pliable sur la roue, de quel le deux extrémités de chaîne sont ensemble raccordables par un joint de chaîne
**caractérisé que**
a l'une de l'extrémités de la chaîne c'est disposée un élément de montage (3) attacheable a la roue et a l'autre extrémité un élément de fixation (7), en que l'élément de montage (3) est en connexion avec l'élément de fixation (7) par un dispositif a crans d'arrêt unidirectionnel (20, 21, 29, 30).

2. Dispositif selon la revendication 1
**caractérisé que**
l'élément de montage (3) possède un part de serrure (5) de couplage pour fermer le joint de chaîne avec l'élément de fixation (7), qui est coincerable et/ou haubaneable par la rotation de la roue avec l'élément de montage.

3. Dispositif selon les revendications 1 ou2
**caractérisé que**
la part de serrure de couplage (5) est pris déplaçable (en mode d'un chariot) dans l'élément de montage (3).

4. Dispositif selon les revendications précédents
**caractérisé que**
le dispositif a crans d'arrêt est forme par au moins d'un élément de profil agissant ensemble avec un élément a crans d'arrêt, en particulier en mode d'un élément dent de scie (20), lorsque l'élément a crans d'arrêt est formé et/ou est disposé sur l'élément de montage, et l'élément dent de scie (20) est formé et/ou est disposé sur la part de serrure (5), formé comme un chariot dans l'élément de montage (3).

5. Dispositif selon les revendications précédents
**caractérisé que**
la part de serrure (5) est formé ainsi que la part de serrure forme dans une disposition avec l'élément de montage (3) le membre de contact avec la chaussée.

6. Dispositif selon la revendication 5
**caractérisé que**
le membre de contact dirige sur l'élément de montage comme épaisseur dans la direction de la chaussée.

7. Dispositif selon les revendications précédents
**caractérisé que**
l'élément de montage (3) est définissable par une poignée de serrage (4) disposé de préférence sur la roue, qui embrasse la roue latéralement.

8. Dispositif selon les revendications précédents
**caractérisé que**
l'élément de fixation (7) est équipé d'un élément de crochet (8), engageante dans un verrou (6) dans la part de serrure (5) de l'élément de montage, âpres la montage automatique de la chaîne.

9. Dispositif selon la revendication 8,
**caractérisé que**
la part de serrure (5) et/ou l'élément de fixation (7) sont formé avec un aimant (18) pour une connexion adhésive entre l'élément de fixation et l'élément de montage et/ou la part de serrure.

10. Dispositif selon les revendications précédents
**caractérisé que**
la chaîne montre deux brins longitudinales (9, 10), qui sont connectés avec des maillons de chaîne équidistantes, ainsi que des membres transversaux (11) adaptées a la roue du véhicule entre les deux brins longitudinales.

11. Dispositif selon les revendications précédents
**caractérisé que**
la poignée de serrage (4) monté rabattable sur l'élément de montage (3) est précontraint par un élément de précontrainte (23) dans une position de fixation, dans lequel la poignée de serrage (4) est montable sur la roue du véhicule.

12. Dispositif selon la revendication 11,
**caractérisé que**
dans la position de montage le plan formé par les deux branches en forme du U et la barre en forme du U de la poignée de serrage (4) est essentiellement orienté perpendiculaire en rapport de l'élément de montage (3), c.-à-d. essentiellement perpendiculaire en rapport de la bande de roulement de la roue.

13. Dispositif selon les revendications 11 ou 12,
**caractérisé que**
l'élément de précontrainte (23) est forme d'un élément a l'arc, qui précontraint élastique la poignée de serrage (4) dans la position de montage.

14. Dispositif selon les revendications du 11 à 13,
**caractérisé que**
l'élément a l'arc et/ou l'élément de précontrainte (23) est forme par un arc de pression, qui se basent d'une part vers l'élément de montage (3), et d'autre part vers la poignée de serrage (4).

15. Dispositif selon les revendications précédents
**caractérisé que**
le joint de chaîne possède un membre de contrôle (28), qui bloque dans la phase du roulage de la chaîne sur la roue du véhicule la part de serrure (5) pour une déplacement relative a l'élément de montage (3).

16. Dispositif selon la revendication 14,
**caractérisé que**
le membre de contrôle est prévu sur la poignée de serrage (4), préférable formé d'une courbure en forme de crochet, ainsi que le membre de contrôle s'attache a un part du serrure (5), préférable a une barre transversale (24).
